# EUROPEAN PATENT APPLICATION

(11) **EP 2 397 974 A1**
(43) Date of publication of application: **21.12.2011**
(21) Application number: 11169685.2
(22) Date of filing: 13.06.2011
(51) Int. Cl.: G06K 19/077

(54) **Non-directional RFID smart card**

(30) Priority: 18.06.2010 TW 99211567
(71) Applicant: HSU, Chih-Hsien, Taipei City Chinese Taipei (TW)
(72) Inventor: HSU, Chih-Hsien, Taipei City Chinese Taipei (TW)
(74) Representative: Merrifield, Sarah Elizabeth

(57) **Abstract**

A non-directional RFID smart card includes triangular, pentagonal or hexagonal pyramid base (2), a 3D coil consisting of multiple circular planar coils (1) or tubular antenna coils (5) that are respectively installed in each of the multiple faces of the pyramid base (2) and connected in series and/or parallel, and an IC chip (11) embedded in the pyramid base. Thus, the 3D coil of the coils (1;5) can cut the magnetic lines of force created by an RFID reader at about 90º angles in any direction to induce an electric current for waking up the IC chip (11).

## Description

### BACKGROUND OF THE INVENTION

### 1. Field of the Invention:

The present invention relates to RFID smart cards and more particularly, to a non-directional RFID smart card, which has a 3D coil of multiple circular planar coils or tubular antenna coils installed in a multilateral pyramid base thereof and, is effectively readable by an RFID smart card approaching in any direction.

### 2. Description of the Related Art:

In 1945 Léon Theremin invented a tool that was considered to be a predecessor of RFID (Radio-frequency identification) technology. RFID technology uses communication through the use of radio waves to exchange data between a reader and an electronic tag attached to an object, for the purpose of identification and tracking. When compared with a conventional 2D identification system, an RFID smart card has the characteristics:
(a) It has an IC chip built therein without battery for logic computing and storing a big amount of storage.
(b) It can be read if passed within close enough proximity to an RFID reader, and also can be read hundreds at a time.
(c) It allows repeated data input and has a long service life.

Subject to the aforesaid advantages, RFID systems are intensively used in office, factory, transportation system, medical center, grocery store, etc. for different applications, such as transportation security control, door security control or inventory control.

Passive RFID tags or smart cards have no battery therein. When an RFID tag or smart card is within the effective range of an RFID reader, the coil of the FID tag or smart card will be induced by the magnetic lines of force created by the RFID reader, causing a charging system to be charged to the saturated status and therefore the IC chip of the RFID tag or smart card is wake up by the charging system for data exchange with the RFID reader.

According to physical laws, exchange of data by means of magnetic waves is directional. When the cut angle between the magnetic lines of force and the antenna is at 90-degree angles, the sensitivity reaches the maximum level for maximum energy conversion. When at zero degree angle, the sensitivity becomes zero, making no energy conversion.

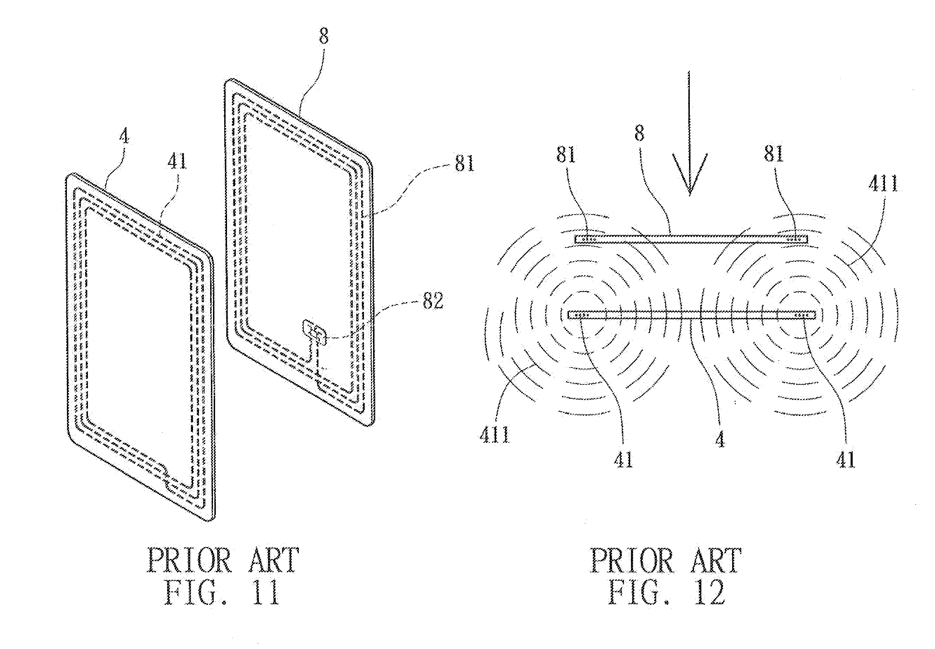

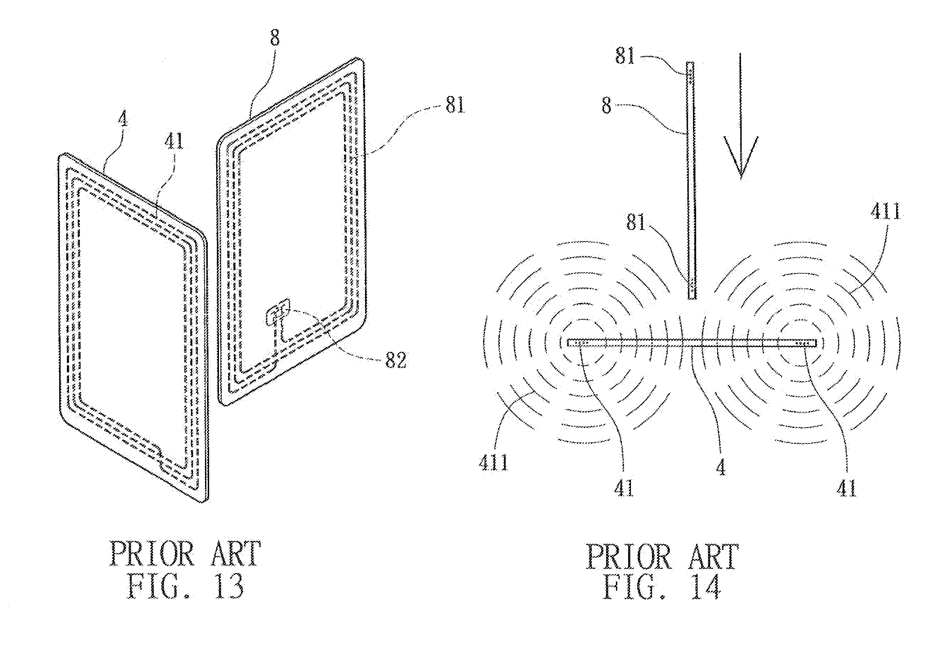

FIGS. 11 and 12 illustrate data exchange between an RFID smart card **8** and an RFID reader **4** according to the prior art. Only When the antenna coil **81** of the RFID smart card 8 and the antenna coil **41** of the RFID reader **4** are kept in parallel within the effective range, the maximum energy can be induced for effective data exchange. The antenna coil **41** of the RFID reader **4** creates magnetic lines of force **411** at 90° angles. When the RFID smart card **8** is approaching the RFID reader **4** in a parallel manner, the magnetic lines of force **411** created by the antenna coil **41** of the RFID reader **4** will be cut by the RFID smart card **8** at 90° angles, inducing the maximum energy to wake up the IC chip **82** in the RFID smart card **8** for data exchange. If the RFID smart card **8** is not approaching the RFID reader **4** in a parallel manner, as shown in FIGS. 13 and 14, the system may induce no energy, causing a reading failure.

### SUMMARY OF THE INVENTION

The present invention has been accomplished under the circumstances in view. It is main object of the present invention to provide a non-directional RFID smart card, which is effectively readable by an RFID smart card approaching in any direction.

To achieve this and other objects of the present invention, a non-directional RFID smart card includes a multilateral pyramid base a 3D coil consisting of multiple circular planar coils or tubular antenna coils that are respectively installed in each of the multiple faces of the multilateral pyramid base and an IC chip embedded in the multilateral pyramid base. Thus, the 3D coil of the multiple circular planar coils or tubular antenna coils can cut the magnetic lines of force created by an RFID reader at about 90° angles in any direction to induce an electric current for waking up the IC chip.

Further, the circular planar coils or tubular antenna coils can be connected in series and/or parallel triangular.

Further, the multilateral pyramid base can be a triangular, pentagonal or hexagonal pyramid base.

### BRIEF DESCRIPTION OF THE DRAWING

FIG. 1 is a perspective view of a non-directional RFID smart card in accordance with a first embodiment of the present invention.

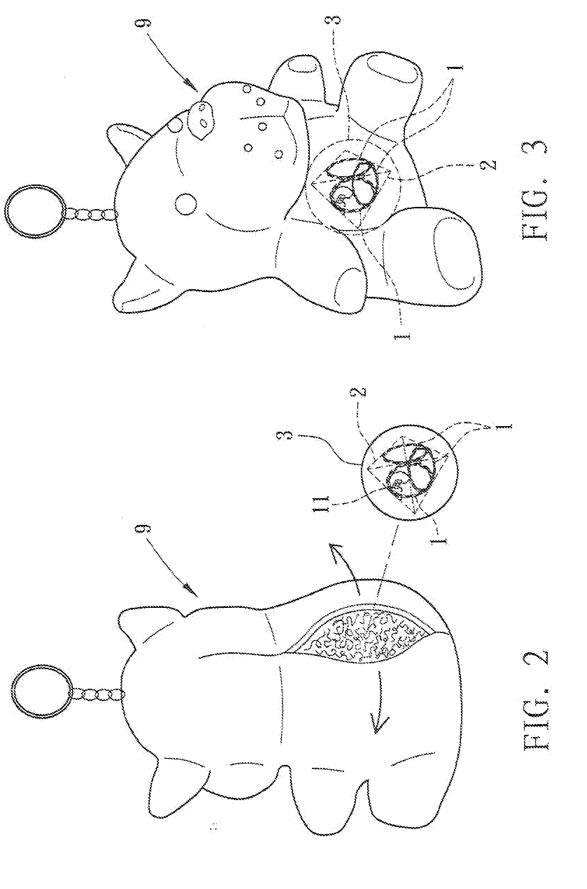

FIG. 2 is a schematic drawing of the first embodiment of the present invention, illustrating the non-directional RID smart card packaged in a cover member.
FIG. 3 corresponds to FIG. 2, illustrating the cover member-packaged non-directional RFID smart card put in the toy.
FIG. 4 is a schematic applied view of the first embodiment of the present invention (I).
FIG. 5 is a schematic applied view of the first embodiment of the present invention (II).

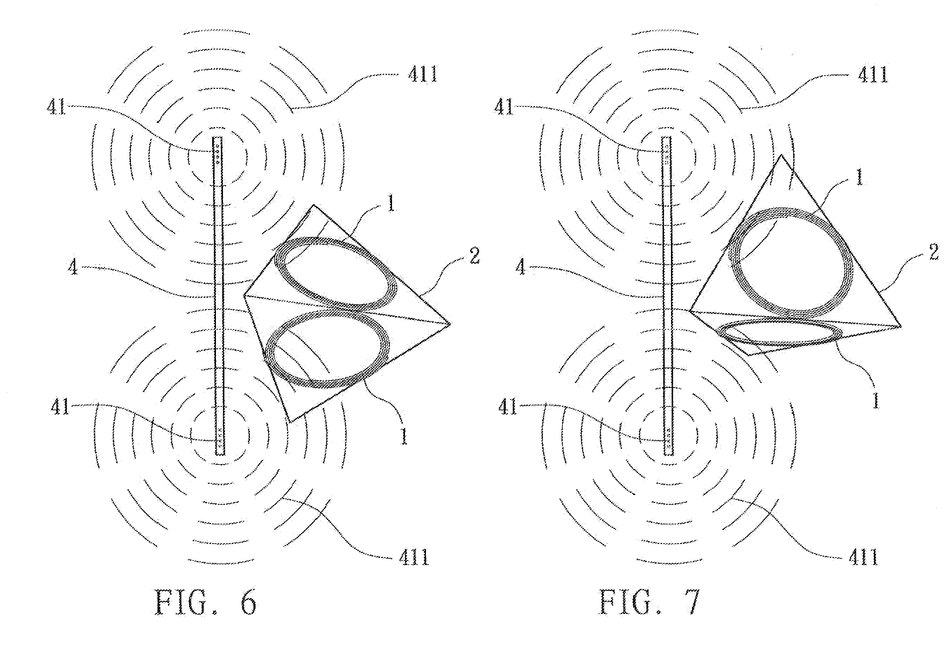

FIG. 6 is a schematic applied view of the first embodiment of the present invention (III).
FIG. 7 is a schematic applied view of the first embodiment of the present invention (IV).
FIG. 8 is a perspective view of a non-directional RFID smart card in accordance with a second embodiment of the present invention.
FIG. 9 is a perspective view of a non-directional RFID smart card in accordance with a third embodiment of the present invention.
FIG. 10 is an exploded view of a non-directional RFID smart card in accordance with a fourth embodiment of the present invention.
FIG. 11 is a schematic drawing illustrating an RFID smart card and an RFID reader disposed in a parallel manner for data exchange according to the prior art.
FIG. 12 corresponds to FIG. 11, illustrating the RFID smart card within the range of the magnetic lines of force of the RFID reader,
FIG. 13 is a schematic drawing illustrating the RFID smart card and the RFID reader disposed in a perpendicular manner relative to each other according to the prior art.
FIG. 14 corresponds to FIG. 13, illustrating the RFID smart card within the range of the magnetic lines of force of the RFID reader.

### DETAILED DESCRIPTION OF THE PREFERRED EMBODIMENT

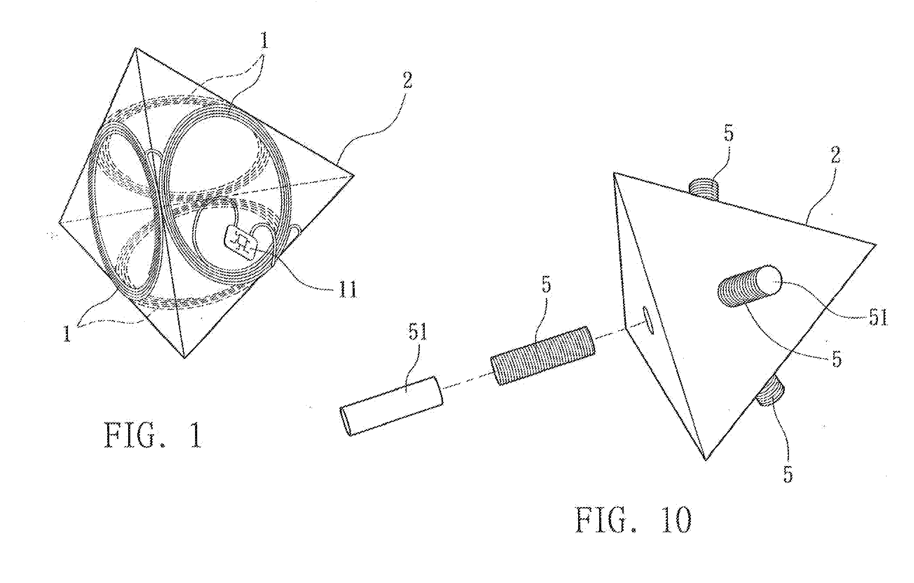

Referring to FIGS. 1∼3, a non-directional RFID smart card in accordance with a first embodiment of the present invention is shown comprising a triangular pyramid base **2**, a circular planar coil 1 installed in each of the 4 faces of the triangular pyramid base **2**, and an IC chip 11 embedded in the triangular pyramid base **2.** The circular planar coils 1 are connected in series and/or parallel, forming a 3D coil. The non-directional RFID smart card may be packaged in a plastic or silicon rubber cover member 3 to protect the 3D coil of the circular planar coils 1, and then put in an object 9, such as a toy. figure, personal item or any of a variety of products, for the purpose of identification and tracking.

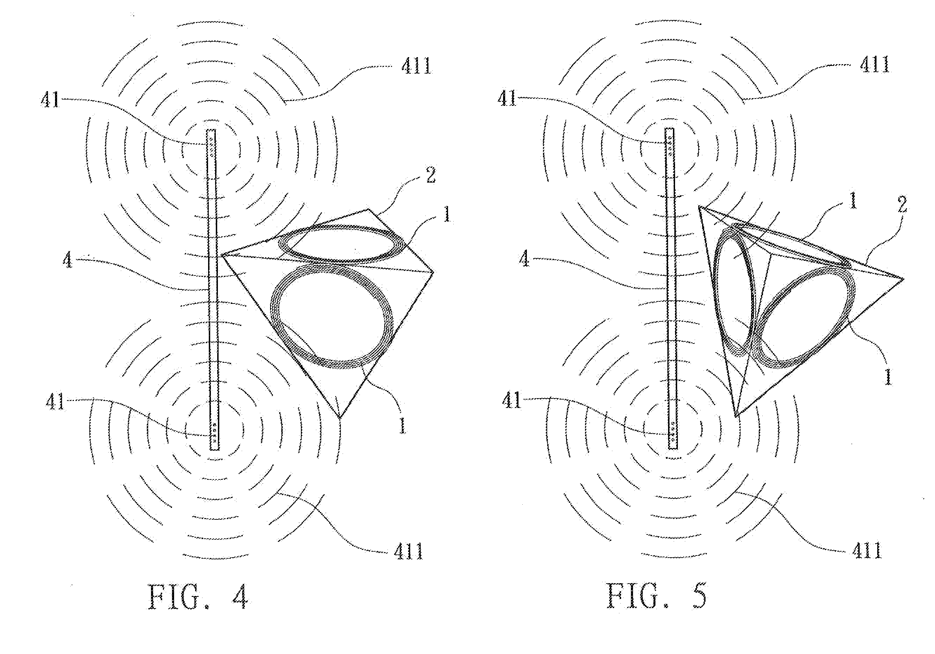

Referring to FIGS. 4∼7, when the non-directional RFID smart card is within the detective range of the magnetic lines of force **411** created by an antenna coil **41** of an RFID reader **4**, the 3D coil of the circular planar coils 1 cuts the magnetic lines of force **411** at about 90° angles in any direction, thereby inducing an electric current to wake up the IC chip **11**.

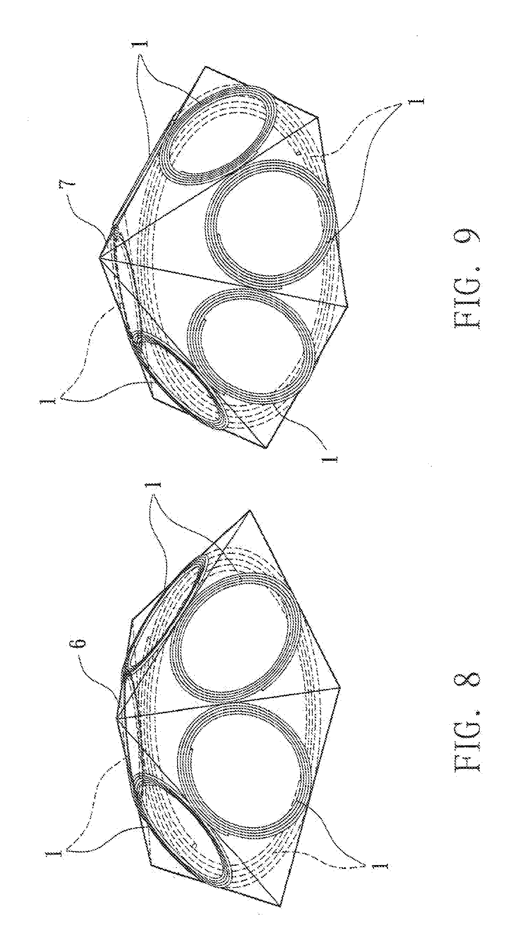

FIG. 8 illustrates a non-directional RFID smart card in accordance with a second embodiment of the present invention. This second embodiment is substantially similar to the aforesaid first embodiment with the exception of the use of a pentagonal pyramid base **6** to substitute for the aforesaid triangular pyramid base **2**.

FIG. 9 illustrates a non-directional RFID smart card in accordance with a third embodiment of the present invention. This third embodiment is substantially similar to the aforesaid first embodiment with the exception of the use of a hexagonal pyramid base **7** to substitute for the aforesaid triangular pyramid base **2**.

Further, the sensitivity (Q-value) of a regular circular planar coil is directly proportional to its diameter. A circular planar coil having a diameter over 10mm provides optimal performance. Below this range, the performance be poor. For use in an object **9** having a small size, the size of the non-directional RFID smart card must be relatively reduced, i.e., the diameter of each circular planar coil 1 of the 3D coil of the non-directional RFID smart card must be relatively reduced. However, reducing the diameter of each circular planar coil 1 of the 3D coil of the non-directional RFID smart card, its sensitivity (Q-value) will be relatively lowered. To overcome this problem, tubular antenna coils can be used. FIG. 10 illustrates non-directional RFID smart card in accordance with a fourth embodiment of the present invention. According to this fourth embodiment, the non-directional RFID smart card comprises a triangular pyramid base **2**, a tubular antenna coil **5** installed in each of the 4 faces of the triangular pyramid base **2**, and an IC chip (not shown) embedded in the triangular pyramid base **2**. The tubular antenna coils **5** are connected in series and/or parallel, forming a 3D coil. Further, each tubular antenna coil 5 is added with an iron powder core **51** to enhance the sensitivity (Q-value).

Although particular embodiments of the invention have been described in detail for purposes of illustration, various modifications and enhancements may be made without departing from the spirit and scope of the invention. Accordingly, the invention is not to be limited except as by the appended claims.

## Claims

1. A non-directional RFID smart card, comprising;
a multilateral pyramid base having multiple faces;
a 3D coil, said 3D coil comprising a plurality of circular planar coils respectively installed in each of the multiple faces of said multilateral pyramid base; and
an IC chip embedded in said multilateral pyramid base.

2. The non-directional RFID smart card as claimed in claim 1, wherein said circular planar coils of said 3D coil are connected in series.

3. The non-directional RFID smart card as claimed in claim 1, wherein said circular planar coils of said 3D coil are connected in parallel.

4. The non-directional RFID smart card as claimed in claim 1, wherein said circular planar coils of said 3D coil are connected in series and parallel.

5. The non-directional RFID smart card as claimed in claim 1, wherein said multilateral pyramid base is packaged in a plastic/silicon rubber cover member.

6. The non-directional RFID smart card as claimed in claim 1, wherein said multilateral pyramid base is a triangular pyramid.

7. The non-directional RFID smart card as claimed in claim 1, wherein said multilateral pyramid base is a pentagonal pyramid.

8. The non-directional RFID smart card as claimed in claim 1, wherein said multilateral pyramid base is a hexagonal pyramid.

9. A non-directional RFID smart card, comprising:
a multilateral pyramid base having multiple faces;
a 3D coil, said 3D coil comprising a plurality of tubular antenna coils respectively installed in each of the multiple faces of said multilateral pyramid base, each said tubular antenna coil having a powdered iron core attached thereof: and
an IC chip embedded in said multilateral pyramid base.

10. The non-directional RFID smart card as claimed in claim 9, wherein said circular planar coils of said 3D coil are connected in series.

11. The non-directional RFID smart card as claimed in claim 9, wherein said circular planar coils of said 3D coil are connected in parallel.

12. The non-directional RFID smart card as claimed in claim 9, wherein said circular planar coils of said 3D coil are connected in series and parallel.

13. The non-directional RFID smart card as claimed in claim 9, wherein said multilateral pyramid base is a triangular pyramid.

14. The non-directional RFID smart card as claimed in claim 9, wherein said multilateral pyramid base is a pentagonal pyramid.

15. The non-directional RFID smart card as claimed in claim 9, wherein said multilateral pyramid base is a hexagonal pyramid.
